**Europäisches Patentamt**

**European Patent Office**

**Office européen des brevets**

(19)

(11) Veröffentlichungsnummer : **0 348 733 B1**

# (12) EUROPÄISCHE PATENTSCHRIFT

(45) Veröffentlichungstag der Patentschrift :
**26.02.92 Patentblatt 92/09**

(51) Int. Cl.$^5$ : **B60T 8/18,** B60T 8/24,
B60T 8/30

(21) Anmeldenummer : **89110756.7**

(22) Anmeldetag : **14.06.89**

(54) **Vorrichtung zur mechanischen Übertragung der Radaufstandskräfte der Hinterräder eines Kraftfahrzeugs.**

(30) Priorität : **25.06.88 DE 3821576**

(43) Veröffentlichungstag der Anmeldung :
**03.01.90 Patentblatt 90/01**

(45) Bekanntmachung des Hinweises auf die
Patenterteilung :
**26.02.92 Patentblatt 92/09**

(84) Benannte Vertragsstaaten :
**DE ES FR IT**

(56) Entgegenhaltungen :
EP-A- 0 004 139
DE-A- 1 906 461
DE-A- 3 225 418
FR-A- 2 329 486
FR-A- 2 371 326

(73) Patentinhaber : **VOLKSWAGEN
AKTIENGESELLSCHAFT
W-3180 Wolfsburg (DE)**

(72) Erfinder : **Totschnig, Manfred
Dannenbütteler Weg 43e
W-3170 Gifhorn (DE)**

EP 0 348 733 B1

Jouve, 18, rue Saint-Denis, 75001 PARIS

## Beschreibung

Die Erfindung betrifft eine Vorrichtung zur mechanischen Übertragung der Radaufstandskräfte der Hinterräder eines Kraftfahrzeuges auf das Steuerglied eines am Fahrzeugaufbau befestigten lastabhängig arbeitenden Bremsdruckreglers der im Oberbegriff des Patentanspruchs 1 genannten Art.

Druckmittelbetätigte Kraftfahrzeug-Bremsanlagen enthalten in den zu den Bremsen der Hinterachse führenden Bremsleitungen häufig einen lastabhängig arbeitenden Bremsdruckregler bzw. Bremsdruckverteiler (Begrenzer, Minderer), dessen Reglerkennlinie sich selbsttätig der sich mit der Fahrzeugbeladung ändernden Achslastverteilung vorn/hinten anpaßt, um so über den ganzen Lastbereich eine möglichst optimale Bremskraftverteilung vorn/hinten zu erreichen.

Insbesondere bei Kraftfahrzeugen, bei denen sich die Achslastverteilung beladungsabhängig sehr stark ändert, ist der Einsatz solcher lastabhängigen Bremsdruckregler unumgänglich, wenn bei allen Beladungszuständen einerseits auch die Hinterachse an der Fahrzeugabbremsung möglichst stark beteiligt sein soll, andererseits aber sichergestellt sein soll, daß beim Bremsen - zur Wahrung der Fahr- bzw. Bremsstabilität - stets die Vorderräder vor den Hinterrädern blockieren.

Zur Steuerung des sogenannten Umschaltdruckes des Bremsdruckreglers, d. h. des Druckwertes, von dem ab den dem Bremsdruckregler nachgeschalteten Bremsen der Hinterachse nur noch ein relativ zum Eingangsdruck begrenzter oder geminderter Bremsdruck zugeführt wird, ist der Bremsdruckregler mit einem Steuerglied, i. a. in Form eines Betätigungshebels, ausgestattet, welches über eine mechanische Vorrichtung mit einer Kraft beaufschlagt wird, die den sich mit der Fahrzeugbeladung ändernden Radaufstandskräften der bremsdruckgeregelten Räder der Hinterachse proportional ist. Die lastabhängige Bremsdruckregelung muß so bemessen sein, daß das Bremsen weder bei Geradeausfahrt noch bei Kurvenfahrt zu einem vorzeitigen Blockieren der Hinterräder führen kann. Darüber hinaus muß generell angestrebt werden, daß sich das Fahrzeug in beiden Kurvenrichtungen gleich verhält; sein Fahr- oder Stabilitätsverhalten beim Bremsen sollte nach Möglichkeit nicht kurvenrichtungsabhängig sein.

Grundsätzlich ist es möglich, und gelegentlich wird dies auch getan, jedem Rad der bremsdruckgeregelten Hinterachse einen eigenen Bremsdruckregler mit einer von der Radaufstandskraft des zugeordneten Rades abhängigen eigenen mechanischen Ansteuerung zuzuordnen. Dadurch werden zwar einerseits regelungstechnisch sehr einfach die beim Bremsen in einer Kurve auftretenden unterschiedlich großen Radaufstandskräfte des einfedernden kurvenäußeren und des ausfedernden kurveninneren Rades berücksichtigt, doch müssen andererseits beide Bremsdruckregler durch entsprechende Selektion und/oder Justierung sehr sorgfältig so aufeinander abgestimmt werden, daß ihre lastabhängigen Kennlinienfelder möglichst genau übereinstimmen, um sicherzustellen, daß beide Bremsdruckregler - bei Geradeausfahrt - synchron arbeiten. Derartige Anordnungen sind also sehr aufwendig und teuer.

Es sind auch druckmittelbetätigte Kraftfahrzeug-Bremsanlagen bekannt (z. B. DE-OS 36 20 772), bei denen ein beiden Rädern der Hinterachse gemeinsamer lastabhängiger Bremsdruckregler, z. B. in Form eines Twinreglers, vorgesehen ist, dessen Steuerglied mechanisch durch eine Vorrichtung angesteuert wird, die einen um seine Längsachse drehbar und quer zur Fahrzeuglängsachse am Fahrzeugaufbau angeordneten Torsionsstab nach Art eines U-Form-Stabilisators enthält, der derart ausgebildet und angeordnet ist, daß der Umschaltdruck des Bremsdruckreglers ausschließlich von der Summe der Radaufstandskräfte der beiden Räder der Hinterachse abhängig ist. Die beim Durchfahren einer Kurve eintretende Vergrößerung der Radaufstandskraft des einfedernden kurvenäußeren Rades und die Verringerung der Radaufstandskraft des ausfedernden kurveninneren Rades übt keinen Einfluß auf den Umschaltdruck aus, weil die Summe der beiden Radaufstandskräfte gleich bleibt. Es ergibt sich daher ein kurvenrichtungsunabhängiges Fahr- und Bremsverhalten des Fahrzeuges.

In der Praxis ist es jedoch recht schwierig, diese Idealverhältnisse zu realisieren. Es ist ein erheblicher konstruktiver und technischer Aufwand erforderlich und es bedarf großer Sorgfalt bei der Montage des Torsionsstabs bzw. bei der Einstellung des Umschaltdrucks des Bremsdruckreglers, um Unsymmetrien zu vermeiden und die angestrebte Kurvenrichtungsunabhängigkeit zu gewährleisten. So müssen z. B. zur aufbauseitigen Anlenkung des Torsionsstabes möglichst statt üblicher Gummilager hochwertige Kunststofflager verwendet werden, um verfälschende Einflüsse durch Verzwängungen und/oder unterschiedlich große Reibungen in den Torsionsstab-Anlenkungen zu vermeiden. Auch werden hohe Anforderungen an die Gleichmäßigkeit des Torsionsstab-Durchmessers gestellt, weil Durchmesserunterschiede schon zu unterschiedlichen Federkennungen der mit den beiden Rädern gekoppelten beiden Teiltorsionsstabfedern (rechter Teil, linker Teil) führen können. Schließlich muß bei der Ankopplung der beiden Torsionsstabenden an den Rädern bzw. deren Radführungsgliedern o. ä. große Sorgfalt aufgebracht werden, daß - zwecks Erzielung eines definierten und kurvenrichtungsunabhängigen Umschaltdrucks des Bremsdruckreglers - beide Teiltorsionsstabfedern möglichst gleich stark vorgespannt werden. Unterschiedliche Vorspannungen der beiden Teiltorsionsstabfedern hätten,

EP 0 348 733 B1

sofern ihre Summe der vorgeschriebenen Summe entspräche, zwar bei Geradeausfahrt keinen Einfluß auf den Umschaltdruck des Bremsdruckreglers, doch würden beim Durchfahren von Kurven richtungsabhängig unterschiedliche Umschaltdrücke auftreten.

Gelegentlich wird den Rädern einer Hinterachse auch die Kombination zwischen einem lastabhängigen Bremsdruckregler und einem diesem nachgeschalteten querkraft- bzw. querbeschleunigungsabhängigen Bremsdruckminderer zugeordnet, wobei der lastabhängige Bremsdruckregler derart angeordnet wird, daß sein Steuerglied nur von einer Achshälfte bzw. der Radaufstandskraft eines der beiden Räder der Achse angesteuert wird. Je nach Kurvenrichtung, d. h. je nachdem ob der Bremsdruckregler nun vom einfedernden kurvenäußeren oder vom ausfedernden kurveninneren Rad angesteuert wird, wird so - bei gleicher Fahrzeugbeladung - ein höherer oder niedrigerer Umschaltdruck eingestellt, was durch den nachgeschalteten querbeschleunigungsabhängigen Bremsdruckminderer ausgeglichen wird, der nämlich so angeordnet und ausgebildet ist, daß er den vom lastabhängigen Bremsdruckregler gelieferten Bremsdruck mindert, wenn die mechanische Ansteuerung des Bremsdruckreglers gerade vom einfedernden kurvenäußeren Rad erfolgt.

Der Aufwand für eine derartige Anordnung ist erheblich und es bedarf wiederum sehr sorgfältiger Justierarbeiten, um den lastabhängigen Bremsdruckregler und den querbeschleunigungsabhängigen Bremsdruckminderer so aufeinander abzustimmen, daß die Bremskraftverteilung möglichst kurvenrichtungsunabhängig ist.

Demzufolge liegt der Erfindung die Aufgabe zugrunde, eine Vorrichtung zur mechanischen Übertragung der Radaufstandskräfte der Hinterräder eines Kraftfahrzeugs der im Oberbegriff des Patentanspruchs 1 genannten Art zu schaffen, die sich bei geringem konstruktiven und montagetechnischen Aufwand durch Zuverlässigkeit und Präzision sowie durch praktisch völlige Kurvenrichtungsunabhängigkeit auszeichnet.

Diese Aufgabe wird erfindungsgemäß durch die Merkmale des Patentanspruchs 1 gelöst. Vorteilhafte Ausgestaltungen und Weiterbildungen der Erfindung sind in den Unteransprüchen angegeben. Erfindungsgemäß enthält also die Vorrichtung zur mechanischen Übertragung der Radaufstandskräfte der Räder der Hinterachse auf das Steuerglied des Bremsdruckreglers einen quer zur Fahrzeuglängsrichtung ausgerichteten Waagebalken, der waagebalkenmittig kraftübertragend am Steuerglied des einzigen Bremsdruckreglers anliegt, und zwei an den freien Enden des Waagebalkens angreifende Federvorrichtungen, welche mit den beiden Rädern der Achse bzw. deren Radträgern o. ä. gekoppelt sind und derart angeordnet und ausgebildet sind, daß ihre Federkräfte mit zunehmender Fahrzeugbeladung zunehmen.

Diese Vorrichtung ist sehr einfach zu montieren. Der Waagebalken wird - im Gegensatz zum Stabilisator bzw. Torsionsstab bekannter Anordnungen - nicht am Aufbau gelagert; er liegt lediglich mittig unmittelbar am Steuerglied des Bremsdruckreglers an. Reibungs- oder verzwängungsbedingte verfälschende Effekte können in diesem Bereich so nicht entstehen.

Die Ankopplung der Federvorrichtungen und die Einstellung des Umschaltdrucks des Bremsdruckreglers ist einfach und völlig unkritisch. Es spielt im Prinzip keine Rolle, ob die beiden Federvorrichtungen beim Einstellen des Umschaltdruckes wirklich gleich stark vorgespannt oder aber etwas unterschiedlich große Kräfte aufgebracht werden; es kommt lediglich auf die Summe der beiden Federkräfte an. Waagebalkenmittig und damit am Steuerglied, wirkt grundsätzlich nur die Summe der Kräfte der an den Waagebalkenenden angreifenden Federvorrichtungen. Der Waagebalken würde sich allenfalls etwas schräg stellen, wenn die beiden Federvorrichtungen etwas unterschiedlich vorgespannt werden.

Um den lastabhängigen Umschaltdruck des Bremsdruckreglers bei Kurvenfahrt - kurvenrichtungsunabhängig - im Vergleich zu dem Verhältnis bei Geradeausfahrt - etwas abzusenken, sind gemäß einer vorteilhaften Ausgestaltung und Weiterbildung der Erfindung in der Schwenkebene und in einem gewissen Abstand zur Waagebalkenlängsachse auf derselben Seite des Waagebalkens zwei aufbaufeste Anschläge vorgesehen, die beiderseits der Waagebalkenmitte angeordnet sind, und zwar in einem Abstand dazu, der um ein Vielfaches größer ist als der Abstand zur Waagebalkenlängsachse.

Durch diese Anschläge wird in einfacher Weise erreicht, daß beim Durchfahren einer Kurve, egal in welcher Richtung, dann, wenn die Querkraft einen bestimmten Wert überschreitet bzw. die Fahrzeugneigung einen bestimmten Winkel erreicht hat, der den Bremsen der Hinterachse zugeführte Bremsdruck über das schon bei Geradeausfahrt lastabhängig eingesteuerte Maß hinaus verringert wird. Durch diese Maßnahme wird es möglich, die Bremsanlage so zu bemessen, daß einerseits bei Geradeausfahrt bei bestmöglicher Ausnutzung des Haftwertes die bestmögliche Bremskraftverteilung vorn/hinten eingestellt wird, andererseits bei Kurvenfahrt - durch die weitere Absenkung des Bremsdruckes - die Fahr- bzw. Bremsstabilität erhöht wird.

Anhand zweier in der Zeichnung dargestellter Ausführungsbeispiele wird die Erfindung nachstehend näher erläutert.

In der Zeichnung zeigen in prinzipienhafter Darstellung

Fig. 1 ein erstes Ausführungsbeispiel einer Vorrichtung gemäß der Erfindung und

Fig. 2 ein zweites Ausführungsbeispiel einer solchen Vorrichtung.

3

Dargestellt in der schematischen Zeichnung sind lediglich die für das Verständnis der Erfindung notwendigen Bauteile. Nicht dargestellt sind insbesondere die Hinterräder des Fahrzeugs mit ihren Radträgern und Radführungsgliedern etc. sowie der lastabhängige Bremsdruckregler selbst.

Vom Bremsdruckregler ist im Querschnitt lediglich das Steuerglied in Form eines Betätigungshebels 5 dargestellt, auf welches in Pfeilrichtung durch die erfindungsgemäße Vorrichtung eine der Summe der Radaufstandskräfte proportionale Kraft S ausgeübt wird, um dadurch den Umschaltdruck des nicht dargestellten lastabhängigen Bremsdruckreglers lastabhängig zu verstellen.

Die Vorrichtung zur mechanischen Übertragung der Radaufstandskräfte auf den Betätigungshebel 5 des Bremsdruckreglers besteht im wesentlichen aus einem Waagebalken 1 und zwei Federvorrichtungen 3 bzw. 3′, über die der Waagebalken mit den Rädern der Hinterachse bzw. deren Radträgern, Radführungsgliedern oder Teilen 2 bzw. 2′ davon mechanisch gekoppelt ist.

Der Waagebalken 1 ist quer zur Fahrzeuglängsrichtung ausgerichtet und liegt waagebalkenmittig über ein Aufnahmeteil 12, in dem es auf einer in Fahrzeuglängsrichtung weisenden Achse 11 schwenkbar gelagert ist, kraftübertragend am Steuerglied, d. h. am Betätigungshebel 5 des Bremsdruckreglers an. An den beiden freien Ende des Waagebalkens greift je eine der beiden Federvorrichtungen 3 bzw. 3′ an, die mit ihrem anderen Ende jeweils mit den Rädern der Hinterachse bzw. deren Radführungsgliedern o. ä. gekoppelt sind.

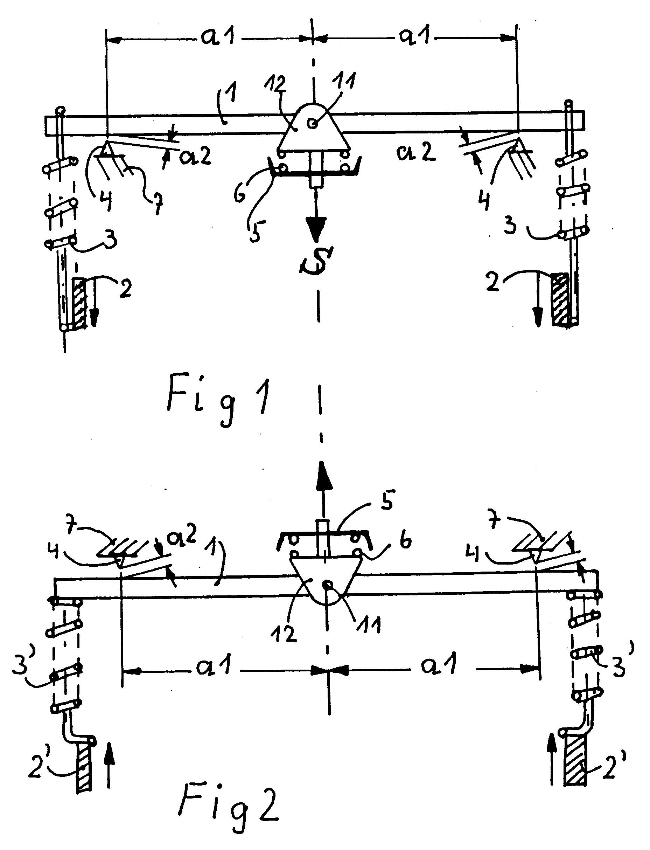

Im in Fig. 1 dargestellten Ausführungsbeispiel sind die Federvorrichtungen als Zugfedern 3 ausgebildet, die mit ihrem waagebalkenfernen Ende an mit den nicht weiter dargestellten Radführungsgliedern (Lenkern) verbundenen Steuerhebeln 2 angreifen, die ihrerseits derart ausgebildet und an den Radführungslenkern angeordnet sind, daß sich der Abstand zwischen ihnen bzw. ihren Zugfeder-Angriffspunkten und dem nicht weiter dargestellten Fahrzeugaufbau 7 mit zunehmender Fahrzeugbeladung, d. h. mit einfedernden Fahrzeugrädern, vergrößert, wie dies in Fig. 1 mit Pfeilen angedeutet ist. Auf die freien Enden des Waagebalkens 1 werden somit von den beiden Zugfedern 3 bei nicht beladenem Fahrzeug, d. h. bei nicht oder nur geringfügig eingefederten Hinterrädern, nur geringe Zugkräfte und bei beladenem Fahrzeug je nach Beladungszustand, entsprechend der mehr oder weniger starken Einfederung der Hinterräder mehr oder weniger große Zugkräfte ausgeübt, deren Summe waagebalkenmittig vom Aufnahmeteil 12 auf den Betätigungshebel 5 des lastabhängigen Bremsdruckreglers übertragen wird, so daß dessen Umschaltdruck entsprechend verändert wird. Nur zur Klarstellung sei in diesem Zusammenhang darauf hingewiesen, daß der Betätigungshebel 5 des Bremsdruckreglers praktisch kaum ausgelenkt wird; er bewegt sich lediglich im Umfang des Ventilweges (offen/geschlossen) des Bremsdruckreglers. An ihm wirkt nur die Kraft der Zugfedern bzw. des Waagebalkens; der Waagebalken verlagert sich somit waagebalkenmittig normalerweise praktisch nicht; nur die von ihm ausgeübte Kraft verändert sich.

Da der Waagebalken 1 in den Ausführungsbeispielen jedoch nicht unmittelbar, sondern unter Zwischenschaltung einer Druckfeder 6 mit vorzugsweise progressiver Kennung am Betätigungshebel 5 des Bremsdruckreglers anliegt, kann/muß sich der Waagebalken 1 in den Ausführungsbeispielen waagebalkenmittig natürlich im Umfang des Federwegs der progressiven Druckfeder 6 verlagern.

Da bei der Übertragung der Zugkräfte der beiden Zugfedern 3 auf den Waagebalken 1 keine Reibung auftritt, kann die am Betätigungshebel 5 wirkende Steuerkraft S und damit der Umschaltdruck des Bremsdruckreglers bei eingebautem Bremsdruckregler kraftmäßig durch definiertes Ziehen an den unteren Enden der Zugfedern 3 genau - und gleichbleibend - eingestellt werden. Hierbei kommt es nicht darauf an, daß an beiden Zugfedern 3 exakt gleich große Einstellkräfte aufgebracht werden, da am Betätigungshebel 5 jeweils die Summe beider Kräfte zur Wirkung kommt. Dies stellt für die Montage des Bremsdruckreglers eine wesentliche Vereinfachung dar. Darüber hinaus kann durch einfachen Austausch der Federvorrichtungen 3 bzw. 3′, d. h. durch Ersetzen der Federvorrichtungen einer Federkennung durch Federvorrichtungen einer anderen Federkennung, der Umschaltdruck des gleichen Bremsdruckreglers leicht verschiedenen Fahrzeugvarianten und-/oder verschiedenen Hinterachsen-Federkennungen angepaßt werden.

Die Zwischenschaltung der Druckfeder 6 mit vorzugsweise progressiver Kennung erleichtert dabei die genaue Einstellung des Umschaltdrucks des Bremsdruckreglers bei Leerlast.

Wie bereits ausgeführt wurde, kommt es auf eine exakt gleiche Vorspannung der beiden Zugfedern 3 nicht an. Falls beim Einstellen des Umschaltdrucks des Bremsdruckreglers bei Leerlast - aus welchen Gründen auch immer - unter Einhaltung der vorgeschriebenen Summe etwas unterschiedlich große Vorspannungen der Zugfedern 3 eingestellt werden, dann hat das lediglich zur Folge, daß der Waagebalken entsprechend der Differenz der beiden Vorspannungen etwas geneigt verläuft.

Die vorgeschlagene Waagebalkenanordnung zur mechanischen Übertragung der Radaufstandskräfte der Hinterräder auf den Betätigungshebel 5 des Bremsdruckreglers gewährleistet, daß die lastabhängige Steuerung des Umschaltdrucks des Bremsdruckreglers kurvenunabhängig ist. Beim Durchfahren einer Kurve stellt sich der Waagebalken 1 entsprechend den gegenläufigen Radbewegungen (Einfedern/Ausfedern) der beiden Räder der Hinterachse schräg, und zwar für beide Kurvenrichtungen in gleicher Weise, so daß der Umschalt-

EP 0 348 733 B1

druck des Bremsdruckreglers nicht davon abhängt, ob das Fahrzeug bei sonst gleichen Bedingungen eine Rechts- oder eine Linkskurve durchfährt.

Da die beim Durchfahren von Kurven auftretenden gegenläufigen Radbewegungen (Ein- bzw. Ausfedern) der beiden Räder der Hinterachse wegmäßig jeweils zumindest annähernd gleich groß sind, wird dabei die als Summe der Federkräfte der beiden Zugfedern 3 am Betätigungshebel 5 wirksame Steuerkraft S, die den Umschaltdruck des lastabhängigen Bremsdruckreglers bestimmt, im Vergleich zur Geradeausfahrt nicht verändert.

Die erfindungsgemäße Vorrichtung zur mechanischen Übertragung der Radaufstandskräfte gewährleistet somit, daß das Fahrzeug zum einen ein weitgehend kurvenrichtungsneutrales Bremsverhalten besitzt und daß zum anderen beim Bremsen in der Kurve keine Erhöhung des Umschaltdrucks des Bremsdruckreglers stattfindet.

Ob die an den freien Enden des Waagebalkens 1 kraftübertragend angreifenden Federvorrichtungen zweckmäßigerweise als Zugfedern 3 - wie in Fig. 1 - oder als Druckfedern 3' - wie in Fig. 2 - ausgebildet werden, hängt von den räumlichen Gegebenheiten des Fahrzeuges ab. Werden die Federvorrichtungen als Zugfedern ausgebildet, dann müssen sie derart an mit den Rädern in Verbindung stehenden Steuerhebeln 2 o. ä. angreifen, daß sich der Abstand zwischen ihrem radseitigen Angriffspunkt und dem Fahrzeugaufbau mit zunehmender Fahrzeugbeladung vergrößert, damit die über die Zugfedern auf den Waagebalken 1 ausgeübten Kräfte mit zunehmender Fahrzeugbeladung größer werden.

In entsprechender Weise müssen als Druckfedern 3' ausgebildete Federvorrichtungen an solchen mit den Rädern in Verbindung stehenden Teilen 2' angreifen, daß sich der Abstand zwischen ihrem radseitigen Federende und dem Fahrzeugaufbau bzw. ihrem waagebalkenseitigen Ende mit zunehmender Fahrzeugbeladung verkleinert, damit die von den Druckfedern 3' auf den Waagebalken 1 ausgeübten Kräfte ebenfalls mit zunehmender Fahrzeugbeladung größer werden.

In den beiden Ausführungsbeispielen sind jeweils zwei in der Schwenkebene des Waagebalkens 1 liegende aufbaufeste, vorzugsweise einstellbare Anschläge 4 vorgesehen, die jeweils auf derselben Seite des Waagebalkens 1 wie der Betätigungshebel 5 und symmetrisch beiderseits der Waagebalkenmitte 11 angeordnet sind. Die beiden Anschläge 4 liegen jeweils in einem vergleichsweise geringen, spielartigen ersten Abstand a2 von der Waagebalkenlängsachse und in einem zweiten Abstand a1 von der Waagebalkenmitte 11 entfernt, wobei der zweite Abstand a1 um ein Vielfaches größer ist als der erste Abstand a2.

Durch die beiden Anschläge 4, die z. B. durch Vewendung von elastomeren Werkstoffen auch leicht nachgiebig ausgebildet sein können, wird in einfacher Weise erreicht, daß der beladungsabhängige Umschaltdruck des Bremsdruckreglers in Abhängigkeit von der beim Durchfahren einer Kurve auftretenden Querbeschleunigung des Fahrzeuges im Vergleich zur Geradeausfahrt reduziert wird, wodurch die Stabilität des Fahrzeugs beim Bremsen in der Kurve, und zwar für beide Kurvenrichtungen in gleicher Weise, weiter verbessert wird.

Beim Durchfahren einer Kurve gelangt der sich dabei schrägstellende Waagebalken 1 nämlich auf der Seite des einfedernden kurvenäußeren Rades der Hinterachse relativ schnell am dort befindlichen aufbaufesten Anschlag 4 zur Anlage. Bei fortschreitender Einfederung des kurvenäußeren Rades infolge steigender Querbeschleunigung des Fahrzeuges wird die Federkraft der kurvenäußeren Zugfeder 3 erhöht, da der Waagebalken 1 infolge der Anlage am kurvenäußeren Anschlag 4 den Radbewegungen nicht mehr folgen kann. Gleichzeitig verringert sich aber die Federkraft der dem ausfedernden kurveninneren Rad zugeordneten anderen Zugfeder 3. Der Waagebalken 1 wird daher etwas um den kurvenäußeren aufbaufesten Anschlag 4 gekippt, wodurch die auf den Betätigungshebel 5 wirkende Steuerkraft S und damit der Umschaltdruck des Bremsdruckreglers reduziert wird. Am Betätigungshebel 5 wirkt in dieser Situation nämlich nicht mehr die Summe der beiden Zugfederkräfte, weil ein Teil der Federkraft der kurvenäußeren Zugfeder vom kurvenäußeren aufbaufesten Anschlag 4 abgefangen wird.

Die Größe der querbeschleunigungsabhängigen Umschaltdruckreduzierung wird im wesentlichen durch die Bemessung und gegenseitige Abstimmung der Abstände a1 und a2 sowie der Art der aufbaufesten Anschläge 4 - starr oder leicht nachgiebig - bestimmt.

Durch die aufbaufesten Anschläge wird außerdem erreicht, daß der den beiden Rädern der Hinterachse zugeordnete lastabhängige Bremsdruckregler dann, wenn die an der Hinterachse auftretenden Radaufstandskräfte aufgrund z. B. unsymmetrischer Beladung des Fahrzeugs verschieden groß sind, jeweils von der kleineren der Radaufstandskräfte ausgesteuert wird, was für die Bremsstabilität bei Geradeausfahrt von großem Vorteil ist.

**Patentansprüche**

1. Vorrichtung zur mechanischen Übertragung der Radaufstandskräfte der Hinterräder eines Kraftfahrzeu-

5

ges auf das Steuerglied (z. B. Betätigungshebel 5) eines am Fahrzeugaufbau (7) befestigten und in den zu den Bremsen der Hinterräder führenden Bremsleitungen angeordneten lastabhängig arbeitenden Bremsdruckreglers (Begrenzer, Minderer) einer druckmittelbetätigten Kraftfahrzeug-Bremsanlage, gekennzeichnet durch einen quer zur Fahrzeuglängsrichtung ausgerichteten Waagebalken (1), der waagebalkenmittig kraftübertragend am Steuerglied (Betätigungshebel 5) anliegt, und zwei an den freien Enden des Waagebalkens (1) angreifende Federvorrichtungen (3, 3'), welche mit den Hinterrädern bzw. deren Radträgern, Radführungsgliedern (Lenkern) oder Teilen (2, 2') davon gekoppelt und derart angeordnet und ausgebildet sind, daß ihre Federkräfte mit zunehmender Fahrzeugbeladung zunehmen.

2. Vorrichtung nach Anspruch 1, dadurch gekennzeichnet, daß die Federvorrichtungen als Zugfedern (3) ausgebildet und an mit den Radführungsgliedern (Lenkern) verbundenen Steuerhebeln (2) angreifen, die derart ausgebildet und angeordnet sind, daß sich der Abstand zwischen ihnen und dem Fahrzeugaufbau (7) bzw. dem Waagebalken (1) mit zunehmender Fahrzeugbeladung vergrößert.

3. Vorrichtung nach Anspruch 1, dadurch gekennzeichnet, daß die Federvorrichtung als Druckfedern (3') ausgebildet und in solchen Bereichen der Radführungsglieder (Lenker) oder Teilen davon (2') angelenkt sind, deren Abstand vom Fahrzeugaufbau (7) sich mit zunehmender Fahrzeugbeladung verkleinert.

4. Vorrichtung nach einem der Ansprüche 1 bis 3, dadurch gekennzeichnet, daß der Waagebalken (1) am Steuerglied (Betätigungshebel 5) unter Zwischenschaltung einer Druckfeder (6), vorzugsweise einer Druckfeder mit progressiver Kennung, anliegt.

5. Vorrichtung nach einem der Ansprüche 1 bis 4, dadurch gekennzeichnet, daß zwei in der Schwenkebene und auf derselben Seite des Waagebalkens (1) wie das Steuerglied (Betätigungshebel 5) liegende aufbaufeste Anschläge (4) vorgesehen sind, die symmetrisch beiderseits der Waagenbalkenmitte (11) angeordnet sind, und zwar jeweils in einem ersten Abstand (a2) zur Waagebalkenlängsachse sowie in einem im Vergleich dazu um ein Vielfaches größeren zweiten Abstand (a1) zur Waagebalkenmitte (11).

## Claims

1. A device for the mechanical transmission of the contact forces of the rear wheels of a motor vehicle to the control member (actuating lever 5, for example) of a load-dependent operating brake pressure regulator (limiter, reducer), secured to the vehicle body (7) and disposed in the brake lines leading to the brakes of the rear wheels, of a pressure-medium-operated motor vehicle brake system, characterised by a balance beam (1) which is aligned transversely to the longitudinal direction of the motor vehicle and whose centre abuts against the control member (actuating lever 5) in a force-transmitting manner, and two spring devices (3, 3') which act upon the free ends of the balance beam (1) and which are connected to the rear wheels or their wheel carriers, wheel guide members (guide rods) or parts (2, 2') thereof and are disposed and constructed in such a way that their spring forces increase with increasing vehicle load.

2. A device as claimed in claim 1, characterised in that the spring devices are in the form of tension springs (3) and act upon the control levers (2) which are connected to the wheel guide members (guide rods) and which are constructed and disposed in such a way that the distance between them and the vehicle body (7) or the balance beam (1) increases with the increasing vehicle load.

3. A device as claimed in claim 1, characterised in that the spring devices are in the form of compression springs (3') and are hinged in regions of the wheel guide members (guide rods), or parts (2') thereof, such that the distance of the hinged regions from the vehicle body (7) decreases with increasing vehicle load.

4. A device as claimed in one of the claims 1 to 3, characterised in that the balance beam (1) abuts against the control member (actuating lever 5) by way of an interposed compression spring (6), preferably a compression spring having a progressive characteristic.

5. A device as claimed in one of the claims 1 to 4, characterised in that there are provided two stops (4) which are fixed to the body and lie in the pivotal plane and on the same side of the balance beam (1) as the control member (actuating lever 5) and are disposed symmetrically on both of the centre (11) of the balance beam, namely in each case at a first distance (a2) from the longitudinal axis of the balance beam and at a second distance (a1) from the centre (11) of the balance beam which is several times greater than the said first distance.

## Revendications

1. Dispositif permettant la transmission mécanique des forces de contact des roues arrière d'une automobile à l'élément de commande (par exemple levier 5 de commande) d'un régulateur (limiteur, détendeur) de freinage, agissant en fonction de la charge, d'un système de freinage automobile à commande par fluide sous pression, ce régulateur de freinage étant fixé sur la carrosserie (7) du véhicule et intégré dans les conduites de frein menant aux freins des roues arrière, caractérisé par un fléau (1) orienté transversalement au sens longitudinal du véhicule, le centre du fléau prenant appui sur l'élément de commande (levier 5 de commande) de façon à transmettre les forces, et caractérisé par deux dispositifs (3, 3') à ressort agissant sur les extrémités libres du fléau (1), qui sont accouplés aux roues arrière ou aux éléments de support ou de guidage des roues (bras de commande) ou à des parties (2, 2') de ceux-ci, et sont disposés et réalisés de telle sorte que leurs forces de ressort augmentent au fur et à mesure que le chargement du véhicule augmente.

2. Dispositif selon la revendication 1, caractérisé en ce que les dispositifs à ressort sont réalisés sous forme de ressorts (3) de traction et agissent sur des leviers (2) de renvoi reliés aux éléments de guidage (bras de commande) des roues, ces leviers de renvoi étant disposés et réalisés de telle façon que la distance entre ces leviers et la carrosserie (7) du véhicule ou entre les leviers et le fléau (1) augmente au fur et à mesure que le chargement du véhicule augmente.

3. Dispositif selon la revendication 1, caractérisé en ce que le dispositif à ressort est réalisé sous forme de ressorts (3') de pression et est articulé sur les éléments de guidage (bras de commande) des roues ou sur des parties (2') de ceux-ci à des endroits dont la distance par rapport à la carrosserie (7) du véhicule diminue au fur et à mesure que le chargement du véhicule augmente.

4. Dispositif selon l'une des revendications 1 à 3, caractérisé en ce que le fléau (1) prend appui sur l'élément de commande (levier 5 de commande) par l'intermédiaire d'un ressort (6) de pression, de préférence par l'intermédiaire d'un ressort de pression à caractéristique progressive.

5. Dispositif selon l'une des revendications 1 à 4, caractérisé en ce que deux butées (4) solidaires de la carrosserie sont prévues, qui se situent dans le plan de basculement du fléau (1), sur la même face du fléau que l'élément de commande (levier 5 de commande), et sont disposées de façon symétrique de part et d'autre du centre (11) du fléau, à une première distance (a2) par rapport à l'axe longitudinal du fléau et à une deuxième distance (a1) par rapport au centre (11) du fléau, cette deuxième distance étant de plusieurs fois supérieure à la première distance.

Fig 1

Fig 2